# EUROPÄISCHE PATENTSCHRIFT

(11) **EP 4 295 203 B1**
(45) Veröffentlichungstag und Bekanntmachung des Hinweises auf die Patenterteilung: **08.07.2026**
(21) Anmeldenummer: 22730398.9
(22) Anmeldetag: 18.05.2022
(51) Int. Cl.: G05B 23/02

(54) **LEITSYSTEM FÜR EINE TECHNISCHE ANLAGE MIT TRENDKURVENDIAGRAMM**
CONTROL SYSTEM FOR A TECHNICAL INSTALLATION WITH A TREND CURVE DIAGRAM
SYSTÈME DE GUIDAGE POUR UNE INSTALLATION TECHNIQUE AYANT UN DIAGRAMME DE COURBE DE TENDANCE

(30) Priorität: 19.05.2021 EP 21174860
(43) Veröffentlichungstag der Anmeldung: 27.12.2023
(73) Patentinhaber: Siemens Aktiengesellschaft, 80333 München (DE)
(72) Erfinder: LUTZ, Benjamin, 76327 Pfinztal (DE)
(74) Vertreter: Siemens Patent Attorneys
(86) Internationale Anmeldenummer: PCT/EP2022/063414
(87) Internationale Veröffentlichungsnummer: WO 2022/243362

(56) Entgegenhaltungen:
- EP-A1- 3 796 119
- US-A1- 2019 086 911
- US-B2- 10 732 618

## Beschreibung

Die Erfindung betrifft ein Leitsystem einer technischen Anlage, welches wenigstens einen Operator Station Server und einen Operator Station Client aufweist, mit den Merkmalen des Anspruchs 1. Außerdem betrifft die Erfindung ein Verfahren zur visuellen Darstellung von zeitlich aggregierten Messwerten und die Verwendung eines Leitsystems zum Betrieb einer technischen Anlage.

Messwerte, die zu technischen Objekten wie Sensoren einer technischen Anlage gehörigen Messgrößen zuzuordnen sind, können im Zuge eines Bedienens und Beobachtens der technischen Anlage einem Operator der technischen Anlage visuell dargeboten werden. Dabei wird oft ein zeitlicher Verlauf der zu der Messgröße gehörigen Messwerte dargestellt, um Veränderungen der Messwerte einfach erkennen zu können. Man spricht in diesem Zusammenhang auch von Trendkurven oder Trendkurvendiagrammen.

Liegen für einen betrachteten Zeitbereich einer Trendkurve mehr Messpunkte einer Messgröße vor, als in dem darzustellenden Bereich von einer Anzeigevorrichtung der technischen Anlage dargestellt werden können, wird die Anzahl der Messpunkte durch Aggregation mathematisch reduziert. Liegen für einen darzustellenden Zeitbereich beispielsweise 28.800 Messpunkte vor und ist der Zeichenbereich nur 1.024 Pixel groß, müssen 28 Messpunkte jeweils zu einem aggregierten Messpunkt zusammengerechnet werden. Es sind verschiedene Methoden bekannt, um eine solche Aggregation vorzunehmen, beispielsweise:
- Max/Min: Hierbei wird lediglich der Messpunkt mit dem kleinsten und der Messpunkt mit dem größten Messwert gezeichnet
- Mittelwert: Der Mittelwert aller Messpunkte wird dargestellt
- Gleitender Mittelwert: Der gleitende Mittelwert aller Messpunkte wird dargestellt, d.h. die benachbarten aggregierten Messpunkte fließen in die Aggregation des Messpunktes mit ein, um einen "harmonischen Kurvenverlauf" zu erzeugen. Dies stellt die gebräuchlichste Aggregationsvariante dar.

Jede Aggregationsmethode bringt jedoch einen entscheidenden Nachteil mit sich: Im Vergleich zu den Rohdaten liegt nach der Aggregation immer eine Abweichung, d.h. eine Unschärfe, vor. Diese kann die Darstellung des Trendverlaufs je nach einem Maß der Abweichung (mit anderen Worten: je nach Unschärfe) verfälschen. Eine Trendkurve mit aggregierten Werten kann sich gegenüber der Trendkurve mit Rohwerten derart stark unterscheiden, dass ein Operator für eine genauerer Betrachtung den Zeitbereich so lange vergrößern muss, bis ihm die Trendkurve mit unverfälschten Rohdaten angezeigt wird.

In der EP 3 805 882 A1 ist ein Leitsystem einer technischen Anlage offenbart, das einen Operator Station Client umfasst, der dazu ausgebildet ist, sogenannte XY-Trenddiagramme zu erzeugen, um Messwerte von technischen Objekten der technischen Anlage zu visualisieren.

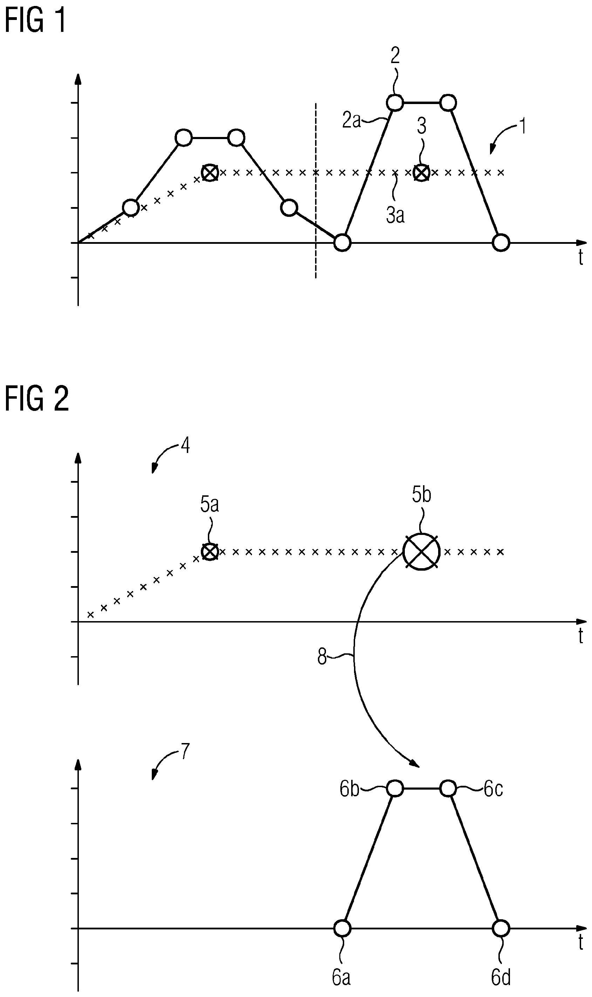

FIG 1 zeigt zwei beispielhafte Trendkurven, d.h. zeitliche Verläufe von Messwerten einer Messgröße. Dabei handelt es sich einerseits um Rohdaten und andererseits um aggregierte Daten. Einem Operator einer technischen Anlage werden, wie zuvor erläutert, in der Regel aggregierte Daten angezeigt. Nur zur Verdeutlichung des negativen Effektes, den die Aggregation der Daten mit sich bringen kann, werden in FIG 1 die aggregierten Daten den Rohdaten gegenübergestellt.

Die Rohdaten der Messgröße sind dabei mit Messpunkten 2 und einer die Messpunkte 2 verbindenden Trendkurve 2a symbolisiert. Die Trendkurve 2a stellt dabei eine Interpolation der Messpunkte 2 dar. Von den Rohdaten abgeleitete, aggregierte Daten sind als Messpunkte 3 mit einem Kreuz darin und einer die Messpunkte 3 verbindenden, die Messpunkte 3 interpolierende Trendkurve 3a (ebenfalls mit Kreuzen gekennzeichnet) dargestellt. Die Aggregation der Rohdaten erfolgt in diesem Beispiel nach dem Mittelwertverfahren. Dies bedeutet, dass ein aggregierter Messpunkt 3 durch eine zeitliche Mittelung von jeweils zwei Messpunkten 2 der Rohdaten vor und nach dem aggregierten Messpunkt 3 berechnet wird.

Es ist zu erkennen, dass eine Unschärfe, d.h. Abweichung, der aggregierten Messpunkte 3 gegenüber den Messpunkten 2 der Rohdaten in den jeweiligen Aggregationsabschnitten unterschiedlich groß ausfällt. Auch an den jeweiligen Trendkurven 2a, 3a können Unterschiede zwischen der Trendkurve 2a der Rohdaten und der Trendkurve 3a der Aggregationsdaten ausgemacht werden, die unter Umständen so groß sind, dass ein Operator einer technischen Anlage im Zuge einer Beurteilung der Trendkurven 2a, 3a die aggregierte Trendkurve 3a so stark vergrößern muss, dass ihm die Trendkurve 2a der Rohdaten angezeigt wird.

Mit der zuvor erläuterten Vorgehensweise sind mehrere Nachteile verbunden:
- Zunächst kann der Operator nicht erkennen, welche Abschnitte einer aggregierten Trendkurve eine hohe Unschärfe aufweisen. Damit kann er auch keine Abschnitte identifizieren, für die der Zeitbereich bis auf Rohdatenniveau vergrößert werden muss, um einen Überblick über den tatsächlichen zeitlichen Verlauf einer Messgröße zu erhalten.
- Darüber hinaus verlieren Operatoren durch das abschnittweise Vergrößern und Verkleinern der aggregierten Trendkurve zur Darstellung von Rohdatenkurven typischerweise den "roten Faden" und verlieren sich in überlappenden Zeitbereichen. Damit einher gehen erhöhte Ladezeiten, die das zeitliche Vergrößern und Verkleinern mit sich bringen können.

In der EP 3 796 119 A1 ist ein Leitsystem offenbart, welches zu aggregierten Messwerten jeweils einen Minimal- und einen Maximalwert desjenigen Messbereichs darstellen, auf welchen sich ein aggregierter Messpunkt jeweils bezieht. Hierdurch lässt sich eine Art Unschärfe des aggregierten Messpunkts ablesen, was sich jedoch als mühselig und wenig intuitiv gestaltet.

Der Erfindung liegt die Aufgabe zugrunde, ein Leitsystem für eine technische Anlage anzugeben, welches einen effizienteren Umgang mit aggregierten Messdaten der technischen Anlage ermöglicht.

Die zuvor formulierte Aufgabe wird durch ein Leitsystem einer technischen Anlage mit den Merkmalen des Anspruchs 1 gelöst. Das Leitsystem weist wenigstens einen Operator Station Server und einen Operator Station Client auf, wobei der Operator Station Server einen Visualisierungsdienst zur Ausgabe von Bildinformationen an den Operator Station Client aufweist.

Der Operator Station Server ist dazu ausgebildet, aus einer zu einem technischen Objekt der technischen Anlage gehörigen Messgröße eine Bildinformation über einen zeitlichen Verlauf von zeitlich aggregierten Messwerten der Messgröße zu erzeugen. Dabei ist der Visualisierungsdienst dazu ausgebildet, die Bildinformation über den zeitlichen Verlauf der zeitlich aggregierten Messwerte der Messgröße an den Operator Station Client zu übertragen. Und dabei ist der Operator Station Client dazu ausgebildet, den zeitlichen Verlauf der zeitlich aggregierten Messwerte einem Operator der technischen Anlage visuell darzubieten.

Das erfindungsgemäße Leitsystem ist dadurch gekennzeichnet, dass der Operator Station Server dazu ausgebildet ist, den zeitlich aggregierten Messwerten jeweils eine Information darüber hinzuzufügen, welche Unschärfe die zeitliche Aggregation des jeweiligen Messwertes im Verhältnis zu den für die zeitliche Aggregation des jeweiligen Messwertes berücksichtigten, nicht aggregierten Messwerten aufweist, und die Information an den Operator Station Client zu übertragen, wobei die Unschärfe der zeitlichen Aggregation des jeweiligen zeitlich aggregierten Messwertes eine Abweichung des jeweiligen zeitlich aggregierten Messwertes von für die zeitliche Aggregation des jeweiligen zeitlich aggregierten Messwertes berücksichtigten, nicht aggregierten Messwerten ist, wobei der Operator Station Client dazu ausgebildet ist, die Information über Unschärfe der zeitlichen Aggregation der zeitlich aggregierten Messwerte dem Operator der technischen Anlage zusammen mit dem zeitlichen Verlauf der zeitlich aggregierten Messwerte derart visuell darzubieten, dass eine Größe einer visuellen Darstellung eines jeweiligen zeitlich aggregierten Messwertes von der Unschärfe der zeitlichen Aggregation der zeitlich aggregierten Messwerte abhängt, wobei das Leitsystem dazu ausgebildet ist, die zeitlich aggregierten Messwerte in einer Kreisform visuell darzustellen.

Erfindungsgemäß ist der Operator Station Server des Leitsystems dazu ausgebildet, zu jedem zeitlich aggregierten Messwert zu berechnen, in welchem Umfang sich der zeitlich aggregierte Messwert von den eigentlichen, nicht aggregierten Messwerten (also den Rohdaten unterscheidet. Dieser Umfang der Unterscheidung wird vorliegend als Unschärfe der Aggregation bezeichnet. Die Berechnung des Maßes der zeitlichen Aggregation erfolgt über eine Differenz des zeitlich aggregierten Messwertes zu den für die Berechnung des zeitlich aggregierten Messwertes verwendeten Messwerten (zu den Rohmesswerten) erfolgen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem kann Sensoren zur Ermittlung von Messwerten sowie verschiedene Aktoren umfassen. Zudem kann das Leitsystem sogenannte prozessnahe Komponenten umfassen, die zur Ansteuerung der Aktoren bzw. Sensoren dienen. Darüber hinaus weist das Leitsystem mit dem Operator Station Client Mittel zur Visualisierung der Prozessanlage auf. Unter dem Begriff Leitsystem sind zusätzlich auch weitere Recheneinheiten für komplexere Regelungen und Systeme zur Datenspeicherung und -verarbeitung zu fassen.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern (sogenannten Operatoren) zur Verfügung stellt. Der Operator Station Server stellt in der Regel eine Kommunikationsverbindung zu Automatisierungssystemen der technischen Anlage her und gibt Daten der technischen Anlage an den sogenannten Operator Station Client weiter, die zur Bedienung und Beobachtung eines Betriebs der einzelnen Funktionselemente der technischen Anlage dienen. Als Operator Station Client kann ein gewöhnlicher Rechner, welcher über eine Monitoreinheit verfügt, dienen. Ein Operator Station Client kann aber auch ein Smartphone, ein Tablet oder dergleichen sein.

Der Operator Station Client kann sich zusammen mit dem Operator Station Server innerhalb der technischen Anlage befinden. Es ist aber auch möglich, dass der Operator Station Server und/oder der Operator Station Client remote, d.h. außerhalb der technischen Anlage befindlich sind. Insbesondere kann der Operator Station Client in einer Cloud, d.h. in einem Computernetzwerk außerhalb der technischen Anlage, realisiert sein.

Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem Operator wird ein menschlicher Bediener der technischen Anlage verstanden. Der Operator interagiert mittels spezieller Benutzerschnittstellen mit der technischen Anlage bzw. dessen Leitsystem und steuert spezielle technische Funktionen der technischen Anlage. Hierzu kann der Operator ein Bedien- und Beobachtungssystem (den Operator Station Client in Verbindung mit dem Operator Station Server) des Leitsystems nutzen.

Unter einem technischen Objekt wird eine abgeschlossene technische Einheit verstanden, die in eine übergeordnete Steuerungsebene integrierbar ist. Ein solches technisches Objekt kann zum Beispiel ein Zusammenschluss mehrerer Messstellen oder ein größerer Anlagenteil einer industriellen Anlage sein. Das technische Objekt muss aber nicht dem Feld der Industrieanlagen entstammen, sondern kann beispielsweise auch ein Motormodul eines Automobils, eines Schiffs oder dergleichen sein.

Der Operator kann mithilfe des erfindungsgemäßen Leitsystems die technische Anlage, insbesondere durch die visuelle Wiedergabe der Unschärfe einer zeitlichen Aggregation von in einem zeitlichen Verlaufsdiagramm dargestellten Messwerten, effizienter und auch sicherer bedienen und beobachten.

Bevorzugt ist das Leitsystem dazu ausgebildet, dem Operator der technischen Anlage eine visuelle Information darüber darzubieten, dass bei den ihm visuell dargebotenen Messwerten eine zeitliche Aggregation erfolgt ist. Dadurch muss der Operator nicht erst mühsam von Hand abfragen, ob Messwerte, die durch den Operator Station Client in einem zeitlichen Verlaufsdiagramm visuell dargeboten werden, einer zeitlichen Aggregation unterliegen.

Das Leitsystem ist erfindungsgemäß dazu ausgebildet, die Information über die Unschärfe der zeitlichen Aggregation der zeitlich aggregierten Messwerte dem Operator der technischen Anlage derart visuell darzubieten, dass eine Größe einer visuellen Darstellung eines jeweiligen zeitlich aggregierten Messwertes von der Unschärfe der zeitlichen Aggregation der zeitlich aggregierten Messwerte abhängt. Eine derartige Darstellung der Unschärfe zeigt dem Operator auf intuitive Art und Weise, ob ein bestimmter Messwert stark oder weniger stark zeitlich aggregiert wurde. Wenn der zeitlich aggregierte Messwert in der visuellen Darstellung größer ist, wird auch die Darstellung entlang einer Werteachse des zeitlichen Verlaufs unschärfer bzw. ungenauer, d.h. ein Betrag des zeitlich aggregierten Messwerts kann visuell nur unpräzise ermittelt werden, was den Operator besonders effizient darauf hinweisen kann, dass der zeitlich aggregierte Messwert eine hohe Unsicherheit / Unschärfe aufweist. Die Darstellung der zeitlich aggregierten Messwerte in einer Kreisform stellt dabei ein vorteilhaftes Merkmal des Leitsystems dar.

Im Rahmen einer bevorzugten Weiterbildung der Erfindung ist das Leitsystem dazu ausgebildet, dem Operator in Reaktion auf eine Anwahl eines dem Operator visuell dargestellten zeitlich aggregierten Messwertes hin die dem zeitlich aggregierten Messwert zugrundeliegenden, nicht aggregierten Messwerte visuell darzustellen. Mit anderen Worten ist jeder zeitlich aggregierte Messwert vorteilhafterweise interaktiv, um eine Rohdaten-Detaillierung anstoßen zu können, ohne den Zeitbereich des gegenwärtig dargestellten zeitlichen Verlaufs verändern zu müssen. Bei Anwahl des aggregierten Messwertes wird deshalb im Rahmen der vorteilhaften Weiterbildung des Leitsystems eine weitere (detaillierende) Trendkurve geöffnet (Trend Loop-In), die den Rohdatenverlauf des aggregierten Messwertes, d.h. die für die zeitliche Aggregation des Messwertes verwendeten Rohmesswerte (ggf. innerhalb eines bestimmten Zeitbereichs um den Zeitpunkt des aggregierten Messwertes herum), darstellt. Möchte der Operator für einen mit großer Unschärfe indizierten, zeitlich aggregierten Messwert die zu Grunde liegenden Rohmessdaten einsehen, muss er nicht, wie bislang notwendig, so lange den zeitlichen Verlauf vergrößern und den Zeitbereich verschieben, bis sich die Trendkurve aus Rohmesswerten zusammensetzt, sondern er muss lediglich den zuvor beschriebenen "Loop-In" durch Anwahl des jeweils zeitlich aggregierten Messwertes anstoßen. Diese Ausprägung macht das Leitsystem deutlich effizienter und ressourcenschonender als bekannte Leitsysteme.

Das Leitsystem kann dabei vorteilhafterweise dazu ausgebildet sein, die visuelle Darstellung der dem angewählten, zeitlich aggregierten Messwert zugrundeliegenden, nicht aggregierten Messwerte parallel zu der visuellen Darstellung des zeitlichen Verlaufs der zeitlich aggregierten Messwerte vorzunehmen. Dadurch erhält der Operator einen Überblick sowohl über die zeitlich aggregierten Messwerte als auch über die zugrundeliegenden Rohmesswerte, die nicht zeitlich aggregiert sind.

Bevorzugt ist der Operator Station Client des Leitsystems dazu ausgebildet, dem Operator Station Server Anforderungen an die zeitliche Aggregation mitzuteilen, anhand derer der Operator Station Server die zeitliche Aggregation der Messwerte vornimmt. Der Operator Station Client kann als Anforderung beispielsweise eine ihm zur visuellen Darstellung zur Verfügung stehende Pixelzahl oder eine Schriftgröße oder dergleichen festlegen.

Die obenstehende Aufgabe wird zudem gelöst durch die Verwendung eines Leitsystems, wie es zuvor erläutert wurde, zum Betrieb einer technischen Anlage.

Die obenstehende Aufgabe wird zudem gelöst durch ein Verfahren zur visuellen Darstellung von zeitlich aggregierten Messwerten, umfassend:
a) Erzeugen einer Bildinformation über einen zeitlichen Verlauf von zeitlich aggregierten Messwerten einer zu einem technischen Objekt einer technischen Anlage gehörigen Messgröße durch einen Operator Station Server eines Leitsystems der technischen Anlage,
b) Hinzufügen einer Information zu der Bildinformation darüber, welche Unschärfe die zeitliche Aggregation eines jeweiligen zeitlich aggregierten Messwerts im Verhältnis zu den für die zeitliche Aggregation des jeweiligen Messwertes berücksichtigten, nicht aggregierten Messwerten aufweist, wobei die Unschärfe der zeitlichen Aggregation des jeweiligen zeitlich aggregierten Messwertes eine Abweichung des jeweiligen zeitlich aggregierten Messwertes von für die zeitliche Aggregation des jeweiligen zeitlich aggregierten Messwertes berücksichtigten, nicht aggregierten Messwerten ist,
c) Übertragen der Bildinformation an einen Operator Station Client,
d) Visuelles Darbieten des zeitlichen Verlaufs der zeitlich aggregierten Messwerte und der Information über die Unschärfe der jeweiligen zeitlichen Aggregation der zeitlich aggregierten Messpunkte an einen Operator der technischen Anlage, wobei die Information über die Unschärfe der zeitlichen Aggregation der zeitlich aggregierten Messwerte dem Operator der technischen Anlage derart visuell dargeboten wird, dass eine Größe einer visuellen Darstellung eines jeweiligen zeitlich aggregierten Messwertes von der Unschärfe der zeitlichen Aggregation der zeitlich aggregierten Messwerte abhängt, und wobei die zeitlich aggregierten Messwerte in einer Kreisform visuell dargestellt werden.

Die Information über die Unschärfe der zeitlichen Aggregation der zeitlich aggregierten Messwerte dem Operator der technischen Anlage derart visuell dargeboten, dass eine Größe einer visuellen Darstellung eines jeweiligen zeitlich aggregierten Messwertes von der Unschärfe der zeitlichen Aggregation der zeitlich aggregierten Messwerte abhängt.

Die zeitlich aggregierten Messwerte werden in einer Kreisform visuell dargestellt.

Bevorzugt wird dem Operator der technischen Anlage eine visuelle Information darüber dargeboten, dass eine zeitliche Aggregation bei den ihm visuell dargebotenen Messwerten erfolgt ist.

Dem Operator können in Reaktion auf eine Anwahl eines dem Operator visuell dargestellten zeitlich aggregierten Messwertes hin die dem zeitlich aggregierten Messwert zugrundeliegenden, nicht aggregierten Messwerte visuell dargestellt werden.

Bevorzugt wird die visuelle Darstellung der dem angewählten, zeitlich aggregierten Messwert zugrundeliegenden, nicht aggregierten Messwerte parallel zu der visuellen Darstellung des zeitlichen Verlaufs der zeitlich aggregierten Messwerte vorgenommen.

Besonders bevorzugt teilt der Operator Station Client dem Operator Station Server Anforderungen an die zeitliche Aggregation mit, anhand derer der Operator Station Server die zeitliche Aggregation der Messwerte vornimmt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Es zeigen:
- FIG 2: einen zeitlichen Verlauf von zeitlich aggregierten Messwerten und einen zeitlichen Verlauf von dazugehörigen Roh-Messwerten; und
- FIG 3: eine schematische Zeichnung eines Teils eines erfindungsgemäßen Leitsystems.

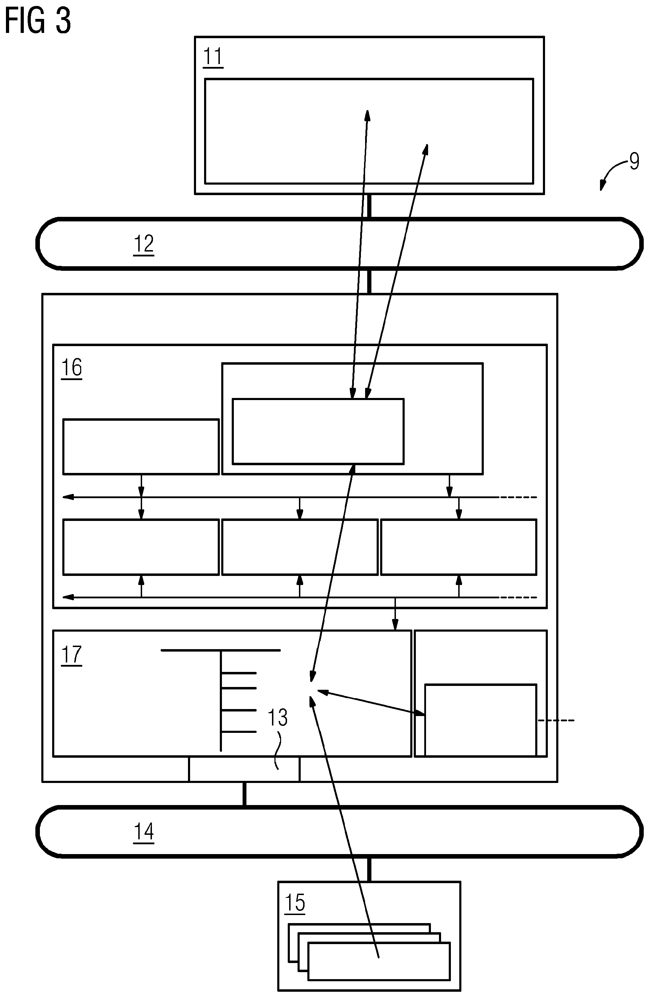

FIG 2 zeigt in einem ersten zeitlichen Verlauf 4 zwei Messwerte 5a, 5b einer Messgröße einer technischen Anlage, wie sie mittels eines Operator Station Clients einem Operator der technischen Anlage visuell dargeboten werden (vgl. hierzu die Beschreibung von FIG 3). Es handelt sich dabei um zeitlich aggregierte Messwerte 5a, 5b. Der in FIG 2 rechts dargestellte Messwert 5b ist dabei durch eine zeitliche Aggregation (hier: ein Mittelwertverfahren) von vier Rohmesswerten 6a, 6b, 6c, 6d berechnet worden. Die vier Rohmesswerte 6a, 6b, 6c, 6d sind dabei in einem zweiten zeitlichen Verlauf 7 im unteren Bereich von FIG 2 dargestellt.

Die beiden zeitlich aggregierten Messwerte 5a, 5b sind in einer Kreisform dargestellt und weisen eine unterschiedliche Größe (d.h. in diesem Fall: Durchmesser) auf. Der größer dargestellte Messwert 5b weist eine größere Unschärfe auf als der kleiner dargestellte Messwert 5a. Ein Operator der technischen Anlage kann sich durch Anwahl eines Messwertes 5a, 5b (z.B. durch Klicken mit einer Computermaus) einen zeitlichen Verlauf der dazugehörigen Rohmesswerte anzeigen lassen. In FIG 2 ist dies durch einen Verweispfeil 8 symbolisiert, welcher vom rechten, zeitlich aggregierten Messwert 5b auf die vier, der zeitlichen Aggregation zugrundeliegenden Messwerte 6a, 6b, 6c, 6d verweist. Der Operator kann dadurch auf einfache Art und Weise einen detaillierten Überblick über Zeitbereiche erlangen, in denen durch die Aggregation möglicherweise kritische Informationen verdeckt werden.

In FIG 3 ist ein Teil eines erfindungsgemäßen Leitsystems 9 einer Prozessanlage dargestellt. Das Leitsystem 9 umfasst einen Server eines Bediensystems bzw. einen Operator Station Server 10 und einen dazugehörigen Operator Station Client 11. Der Operator Station Server 10 und der Operator Station Client 11 sind über einen Terminalbus 12 miteinander und mit nicht dargestellten weiteren Komponenten des Leitsystems 9 wie einem Engineering System Server oder einem Prozessdatenarchiv verbunden.

Ein Benutzer bzw. Operator hat mittels des Operator Station Clients 11 mittels des Terminalbus 12 im Kontext eines Bedienens und Beobachtens Zugriff auf den Operator Station Server 10. Der Terminalbus 12 kann, ohne sich darauf zu beschränken, beispielsweise als Industrial Ethernet ausgebildet sein.

Der Operator Station Server 10 weist eine Geräteschnittstelle 13 auf, die mit einem Anlagenbus 14 verbunden ist. Hierüber kann der Operator System Server 10 mit einem Automatisierungsgerät 15 des Leitsystems 9 kommunizieren. Der Anlagenbus 14 kann, ohne sich darauf zu beschränken, beispielsweise als Industrial Ethernet ausgebildet sein. Das Automatisierungsgerät 15 kann wiederum mit einer beliebigen Anzahl an Subsystemen (nicht dargestellt) verbunden sein.

In dem Operator Station Server 10 ist ein Visualisierungsdienst 16 integriert, über den eine Übertragung von (Visualisierungs-)Daten an den Operator Station Client 11 erfolgen kann. Zudem weist der Operator Station Server 10 ein Prozessabbild (Process Image) 17 der Prozessanlage auf.

Im Folgenden wird der Ablauf eines erfindungsgemäßen Verfahrens erläutert. Ein Operator der Prozessanlage wählt auf dem Operator Station Client 11 einen zeitlichen Verlauf (eine Trendkurve) eines zu einer Messgröße eines technischen Objektes gehörigen Messwertes (welches technische Objekt über das Automatisierungsgerät 15 automatisiert ist) aus, den er visualisiert haben möchte. Der Operator Station Client 11 teilt dem Operator Station Server 10 dabei Anforderungen mit, die an die zeitliche Aggregation der dazustellenden Messwerte zu stellen sind. Dabei kann es sich beispielsweise um eine zur Verfügung stehende Pixelanzahl oder um eine Schriftgröße oder dergleichen handeln.

Der Operator Station Server 10 führt auf Basis der Anforderungen des Operator Station Clients 11 eine zeitliche Aggregation der in dem Prozessabbild 17 hinterlegten Messwerte (d.h. der Rohdaten) durch. Dabei fügt der Operator Station Server 10 jedem zeitlich aggregierten Messwert bzw. der hierzu erzeugten Bildinformation für den Operator Station Client 11 eine Information zu darüber zu, welche Unschärfe die zeitliche Aggregation des jeweiligen zeitlich aggregierten Messwerts im Verhältnis zu den für die zeitliche Aggregation des jeweiligen Messwertes berücksichtigten, nicht aggregierten Messwerten aufweist. Die Unschärfe kann dabei beispielweise durch eine Summierung von Differenzen des zeitlich aggregierten zu den zugrundeliegenden Messwerten berechnet werden.

Die zeitlich aggregierten Messwerte werden mit den hinzugefügten Informationen bezüglich der Unschärfe als Bildinformation an den Operator Station Client 11 übertragen. Anschließend werden dem Operator Trendverläufe 4, 7 visuell dargeboten, wie sie beispielsweise in FIG 2 zu erkennen sind. Dem Operator kann dabei durch eine entsprechende Textmeldung signalisiert werden, ob es sich bei einem bestimmten Trendverlauf um aggregierte Messwerte oder normale Messwerte (Rohdaten) handelt.

Obwohl die Erfindung im Detail durch das bevorzugte Ausführungsbeispiel und die Figuren näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitsystem (9) für eine technische Anlage, welches wenigstens einen Operator Station Server (10) und einen Operator Station Client (11) aufweist,
welcher Operator Station Server (10) einen Visualisierungsdienst (16) zur Ausgabe von Bildinformationen an den Operator Station Client (11) aufweist,
wobei der Operator Station Server (10) dazu ausgebildet ist, aus einer zu einem technischen Objekt der technischen Anlage gehörigen Messgröße eine Bildinformation über einen zeitlichen Verlauf (4, 7) von zeitlich aggregierten Messwerten (5a, 5b) der Messgröße zu erzeugen,
und wobei der Visualisierungsdienst (16) dazu ausgebildet ist, die Bildinformation über den zeitlichen Verlauf (4, 7) der zeitlich aggregierten Messwerte (5a, 5b) der Messgröße an den Operator Station Client (11) zu übertragen,
und wobei der Operator Station Client (11) dazu ausgebildet ist, den zeitlichen Verlauf (4, 7) der zeitlich aggregierten Messwerte (5a, 5b) einem Operator der technischen Anlage visuell darzubieten,
**dadurch gekennzeichnet, dass**
der Operator Station Server (10) dazu ausgebildet ist, den zeitlich aggregierten Messwerten (5a, 5b) jeweils eine Information darüber hinzuzufügen, welche Unschärfe die zeitliche Aggregation des jeweiligen Messwertes im Verhältnis zu den für die zeitliche Aggregation des jeweiligen Messwertes berücksichtigten, nicht aggregierten Messwerten (6a, 6b, 6c, 6d) aufweist, und die Information an den Operator Station Client (11) zu übertragen, wobei die Unschärfe der zeitlichen Aggregation des jeweiligen zeitlich aggregierten Messwertes (5a, 5b) eine Abweichung des jeweiligen zeitlich aggregierten Messwertes (5a, 5b) von für die zeitliche Aggregation des jeweiligen zeitlich aggregierten Messwertes (5a, 5b) berücksichtigten, nicht aggregierten Messwerten (6a, 6b, 6c, 6d) ist,
wobei der Operator Station Client (11) dazu ausgebildet ist, die Information über die Unschärfe der zeitlichen Aggregation der zeitlich aggregierten Messwerte (5a, 5b) dem Operator der technischen Anlage zusammen mit dem zeitlichen Verlauf (4, 7) der zeitlich aggregierten Messwerte (5a, 5b) derart visuell darzubieten, dass eine Größe einer visuellen Darstellung eines jeweiligen zeitlich aggregierten Messwertes (5a, 5b) von der Unschärfe der zeitlichen Aggregation der zeitlich aggregierten Messwerte (5a, 5b) abhängt, wobei das Leitsystem (9) dazu ausgebildet ist, die zeitlich aggregierten Messwerte (5a, 5b) in einer Kreisform visuell darzustellen.

2. Leitsystem (9) nach Anspruch 1, das dazu ausgebildet ist, dem Operator der technischen Anlage eine visuelle Information darüber darzubieten, dass bei den ihm visuell dargebotenen Messwerten eine zeitliche Aggregation erfolgt ist.

3. Leitsystem (9) nach einem der vorangegangenen Ansprüche, das dazu ausgebildet ist, dem Operator in Reaktion auf eine Anwahl eines dem Operator visuell dargestellten zeitlich aggregierten Messwertes (5a, 5b) hin die dem zeitlich aggregierten Messwert (5a, 5b) zugrundeliegenden, nicht aggregierten Messwerte (6a, 6b, 6c, 6d) visuell darzustellen.

4. Leitsystem (9) nach Anspruch 3, das dazu ausgebildet ist, die visuelle Darstellung der dem angewählten, zeitlich aggregierten Messwert (5a, 5b) zugrundeliegenden, nicht aggregierten Messwerte (6a, 6b, 6c, 6d) parallel zu der visuellen Darstellung des zeitlichen Verlaufs der zeitlich aggregierten Messwerte (5a, 5b) vorzunehmen.

5. Leitsystem (9) nach eine der vorangegangenen Ansprüche, bei dem der Operator Station Client (11) dazu ausgebildet ist, dem Operator Station Server (10) Anforderungen an die zeitliche Aggregation mitzuteilen, anhand derer der Operator Station Server (10) die zeitliche Aggregation der Messwerte vornimmt.

6. Verwendung eines Leitsystems (9) nach einem der vorangegangenen Ansprüche zum Betrieb einer technischen Anlage.

7. Verfahren zur visuellen Darstellung von zeitlich aggregierten Messwerten (5a, 5b), umfassend:
a) Erzeugen einer Bildinformation über einen zeitlichen Verlauf von zeitlich aggregierten Messwerten (5a, 5b) einer zu einem technischen Objekt einer technischen Anlage gehörigen Messgröße durch einen Operator Station Server (10) eines Leitsystems (9) der technischen Anlage,
b) Hinzufügen einer Information zu der Bildinformation darüber, welche Unschärfe die zeitliche Aggregation eines jeweiligen zeitlich aggregierten Messwerts (5a, 5b) im Verhältnis zu den für die zeitliche Aggregation des jeweiligen Messwertes berücksichtigten, nicht aggregierten Messwerten (6a, 6b, 6c, 6d) aufweist, wobei die Unschärfe der zeitlichen Aggregation des jeweiligen zeitlich aggregierten Messwertes (5a, 5b) eine Abweichung des jeweiligen zeitlich aggregierten Messwertes (5a, 5b) von für die zeitliche Aggregation des jeweiligen zeitlich aggregierten Messwertes (5a, 5b) berücksichtigten, nicht aggregierten Messwerten (6a, 6b, 6c, 6d) ist,
c) Übertragen der Bildinformation an einen Operator Station Client (11),
d) Visuelles Darbieten des zeitlichen Verlaufs der zeitlich aggregierten Messwerte (5a, 5b) und der Information über die Unschärfe der jeweiligen zeitlichen Aggregation der zeitlich aggregierten Messpunkte (5a, 5b) an einen Operator der technischen Anlage, wobei die Information über die Unschärfe der zeitlichen Aggregation der zeitlich aggregierten Messwerte (5a, 5b) dem Operator der technischen Anlage derart visuell dargeboten wird, dass eine Größe einer visuellen Darstellung eines jeweiligen zeitlich aggregierten Messwertes (5a, 5b) von der Unschärfe der zeitlichen Aggregation der zeitlich aggregierten Messwerte (5a, 5b) abhängt, und wobei die zeitlich aggregierten Messwerte (5a, 5b) in einer Kreisform visuell dargestellt werden.

8. Verfahren nach Anspruch 7, bei dem dem Operator der technischen Anlage eine visuelle Information darüber dargeboten wird, dass eine zeitliche Aggregation bei den ihm visuell dargebotenen Messwerten erfolgt ist.

9. Verfahren nach einem der Ansprüche 7 oder 8, bei dem dem Operator in Reaktion auf eine Anwahl eines dem Operator visuell dargestellten zeitlich aggregierten Messwertes (5a, 5b) hin die dem zeitlich aggregierten Messwert (5a, 5b) zugrundeliegenden, nicht aggregierten Messwerte (6a, 6b, 6c, 6d) visuell dargestellt wird.

10. Verfahren nach Anspruch 9, bei dem die visuelle Darstellung der dem angewählten, zeitlich aggregierten Messwert (5a, 5b) zugrundeliegenden, zeitlich nicht aggregierten Messwerte (6a, 6b, 6c, 6d) parallel zu der visuellen Darstellung des zeitlichen Verlaufs der zeitlich aggregierten Messwerte (5a, 5b) vorgenommen wird.

11. Verfahren nach einem der Ansprüche 7 bis 10, bei dem der Operator Station Client (11) dem Operator Station Server (10) Anforderungen an die zeitliche Aggregation mitteilt, anhand derer der Operator Station Server (10) die zeitliche Aggregation der Messwerte vornimmt.

## Claims

1. Control system (9) for a technical plant, which has at least one operator station server (10) and one operator station client (11),
which operator station server (10) has a visualisation service (16) for outputting items of image information to the operator station client (11),
wherein the operator station server (10) is embodied to generate an item of image information about a temporal course (4, 7) of temporally aggregated measured values (5a, 5b) of the measured variable from a measured variable pertaining to a technical object of the technical plant,
and wherein the visualisation service (16) is embodied to transmit the item of image information about the temporal course (4, 7) of the temporally aggregated measured values (5a, 5b) of the measured variable to the operator station client (11),
and wherein the operator station client (11) is embodied to visually present the temporal course (4, 7) of the temporally aggregated measured values (5a, 5b) to an operator of the technical plant,
**characterised in that**
the operator station server (10) is embodied to add to the temporally aggregated measured values (5a, 5b) an item of information respectively about which fuzziness the temporal aggregation of the respective measured value has in relation to the non-aggregated measured values (6a, 6b, 6c, 6d) considered for the temporal aggregation of the respective measured value, and transmit the item of information to the operator station client (11), wherein the fuzziness of the temporal aggregation of the respective temporally aggregated measured value (5a, 5b) is a deviation of the respective temporally aggregated measured value (5a, 5b) from the non-aggregated measured values (6a, 6b, 6c, 6d) considered for the temporal aggregation of the respective temporally aggregated measured value (5a, 5b),
wherein the operator station client (11) is embodied to visually present the item of information about the fuzziness of the temporal aggregation of the temporally aggregated measured values (5a, 5b) to the operator of the technical plant together with the temporal course (4, 7) of the temporally aggregated measured values (5a, 5b) in such a way that a size of a visual representation of a respective temporally aggregated measured value (5a, 5b) depends on the fuzziness of the temporal aggregation of the temporally aggregated measured values (5a, 5b), wherein the control system (9) is embodied to visually represent the temporally aggregated measured values (5a, 5b) in a circular shape.

2. Control system (9) according to claim 1, which is embodied to present to the operator of the technical plant an item of visual information that a temporal aggregation has taken place in the measured values visually presented to him.

3. Control system (9) according to one of the preceding claims, which is embodied to visually represent to the operator, in response to a selection of a temporally aggregated measured value (5a, 5b) visually represented to the operator, the non-aggregated measured values (6a, 6b, 6c, 6d) underlying the temporally aggregated measured value (5a, 5b).

4. Control system (9) according to claim 3, which is embodied to conduct the visual representation of the non-aggregated measured values (6a, 6b, 6c, 6d) underlying the selected, temporally aggregated measured value (5a, 5b) parallel to the visual representation of the temporal course of the temporally aggregated measured values (5a, 5b).

5. Control system (9) according to one of the preceding claims, wherein the operator station client (11) is embodied to communicate to the operator station server (10) demands on the temporal aggregation, on the basis of which the operator station server (10) conducts the temporal aggregation of the measured values.

6. Use of a control system (9) according to one of the preceding claims for operating a technical plant.

7. Method for visual representation of temporally aggregated measured values (5a, 5b), comprising:
a) generating an item of image information about a temporal course of temporally aggregated measured values (5a, 5b) of a measured variable pertaining to a technical object of a technical plant by way of an operator station server (10) of a control system (9) of the technical plant,
b) adding an item of information to the item of image information about which fuzziness the temporal aggregation of a respective temporally aggregated measured value (5a, 5b) has in relation to the non-aggregated measured values (6a, 6b, 6c, 6d) considered for the temporal aggregation of the respective measured value, wherein the fuzziness of the temporal aggregation of the respective temporally aggregated measured value (5a, 5b) is a deviation of the respective temporally aggregated measured value (5a, 5b) from the non-aggregated measured values (6a , 6b, 6c, 6d) considered for the temporal aggregation of the respective temporally aggregated measured value (5a, 5b),
c) transmitting the item of image information to an operator station client (11),
d) visual presentation of the temporal course of the temporally aggregated measured values (5a, 5b) and the information about the fuzziness of the respective temporal aggregation of the temporally aggregated measuring points (5a, 5b) to an operator of the technical plant, wherein the information about the fuzziness of the temporal aggregation of the temporally aggregated measured values (5a, 5b) is visually presented to the operator of the technical plant in such a way that a size of a visual representation of a respective temporally aggregated measured value (5a, 5b) depends on the fuzziness of the temporal aggregation of the temporally aggregated measured values (5a, 5b), and wherein the temporally aggregated measured values (5a, 5b) are visually represented in a circular shape.

8. Method according to claim 7, wherein the operator of the technical plant is presented with visual information that a temporal aggregation has taken place in the measured values visually presented to him.

9. Method according to one of claims 7 or 8, wherein in response to a selection of a temporally aggregated measured value (5a, 5b) visually represented to the operator, the non-aggregated measured values (6a, 6b, 6c, 6d) underlying the temporally aggregated measured value (5a, 5b) are visually represented to the operator.

10. Method according to claim 9, wherein the visual representation of the temporally non-aggregated measured values (6a, 6b, 6c, 6d) underlying the selected, temporally aggregated measured value (5a, 5b) is conducted parallel to the visual representation of the temporal course of the temporally aggregated measured values (5a, 5b).

11. Method according to one of claims 7 to 10, wherein the operator station client (11) communicates to the operator station server (10) demands on the temporal aggregation, with the aid of which the operator station server (10) conducts the temporal aggregation of the measured values.

## Revendications

1. Système (9) de conduite d'une installation technique, qui a au moins un operator station server (10) et un operator station client (11),
lequel operator station server (10) a un service (16) de visualisation pour donner des informations d'image à l'operator station client (11),
dans lequel l'operator station server (10) est constitué pour produire, à partir d'une grandeur de mesure appartenant à un objet technique de l'installation technique, une information d'image sur un déroulement (4, 7) dans le temps de valeurs (5a, 5b) de mesure agrégées en fonction du temps de la grandeur de mesure,
et dans lequel le service (16) de visualisation est constitué pour transmettre, à l'operator station client (11), l'information d'image sur le déroulement (4, 7) dans le temps des valeurs (5a, 5b) de mesure agrégées en fonction du temps de la grandeur de mesure,
et dans lequel l'operator station client (11) est constitué pour offrir visuellement la courbe (4, 7) en fonction du temps des valeurs (5a, 5b) de mesure agrégées en fonction du temps à un operator de l'installation technique,
**caractérisé en ce que**
l'operator station server (10) est constitué pour ajouter, aux valeurs (5a, 5b) de mesure agrégées en fonction du temps, respectivement une information sur le manque de netteté qu'à l'agrégation en fonction du temps de la valeur de mesure respective par rapport aux valeurs (6a, 6b, 6c, 6d) de mesure non agrégées prises en compte pour l'agrégation en fonction du temps de la valeur (5a, 5b) de mesure respective et transmettre l'information à l'operator station client (11), dans lequel le manque de netteté de l'agrégation en fonction du temps de la valeur (5a, 5b) de mesure agrégée respective en fonction du temps est un écart de la valeur (5a, 5b) de mesure agrégée respective en fonction du temps à des valeurs (6a, 6b, 6c, 6d) de mesure non agrégées, prises en compte pour l'agrégation en fonction du temps de la valeur (5a, 5b) de mesure agrégée respective en fonction du temps,
dans lequel l'operator station client (11) est constitué pour offrir visuellement l'information sur le manque de netteté de l'agrégation en fonction du temps des valeurs (5a, 5b) de mesure agrégées en fonction du temps à l'operator de l'installation technique ensemble avec la courbe (4, 7) en fonction du temps des valeurs (5a, 5b) de mesure agrégées en fonction du temps, de manière à ce qu'une dimension d'une représentation visuelle d'une valeur (5a, 5b) de mesure agrégée respective en fonction du temps dépende d'une manque de netteté de l'agrégation en fonction du temps des valeurs (5a, 5b) de mesure agrégées en fonction du temps, dans lequel le système (9) de conduite est constitué pour représenter visuellement, sous une forme circulaire, les valeurs (5a, 5b) de mesure agrégées en fonction du temps.

2. Système (9) de conduite suivant la revendication 1, qui est constitué pour offrir à l'operator de l'installation technique une information visuelle, que, pour les valeurs qui lui sont représentées visuellement, une agrégation en fonction du temps est effectuée.

3. Système (9) de conduite suivant l'une des revendications précédentes, qui est constitué pour représenter visuellement à l'operator, en réaction à un choix d'une valeur (5a, 5b) de mesure agrégée en fonction du temps représentée visuellement à l'operator, les valeurs (6a, 6b, 6c, 6d) de mesure non agrégées à la base de la valeur (5a, 5b) de mesure intégrée en fonction du temps.

4. Système (9) de conduite suivant la revendication 3, qui est constitué pour effectuer, parallèlement à la représentation visuelle de la courbe en fonction du temps des valeurs (5a, 5b) de mesure agrégées en fonction du temps, la représentation visuelle des valeurs (6a, 6b, 6c, 6d) de mesure non agrégées choisies à la base de la valeur (5a, 5b) agrégée en fonction du temps.

5. Système (9) de conduite suivant l'une des revendications précédentes, dans lequel l'operator station client (11) est constitué pour faire part, à l'operator station server (10), d'exigences sur l'agrégation en fonction du temps, à l'aide desquelles l'operator station server (10) effectue l'agrégation en fonction du temps des valeurs de mesure.

6. Utilisation d'un système (9) de conduite suivant l'une des revendications précédentes pour faire fonctionner une installation technique.

7. Procédé de représentation visuelle de valeurs (5a, 5b) de mesure agrégées en fonction du temps, comprenant :
a) production d'une information d'image sur une courbe en fonction du temps de valeurs (5a, 5b) de mesure agrégées en fonction du temps d'une grandeur de mesure appartenant à un objet technique d'une installation technique par un operator station server (10) d'un système (9) de conduite de l'installation technique,
b) ajout à l'information d'image d'une information sur le manque de netteté qu'a l'agrégation en fonction du temps de la valeur de mesure respective par rapport aux valeurs (6a, 6b, 6c, 6d) de mesure non agrégées prises en compte pour l'agrégation en fonction de la valeur (5a, 5b) de mesure respective, dans lequel le manque de netteté de l'agrégation en fonction du temps de la valeur (5a, 5b) de mesure agrégée respective en fonction du temps est un écart de la valeur (5a, 5b) de mesure agrégée respective en fonction du temps à des valeurs (6a, 6b, 6c, 6d) de mesure non agrégées prises en compte pour l'agrégation en fonction du temps de la valeur (5a, 5b) de mesure agrégée respective en fonction du temps,
c) transmission de l'information d'image à un operator station client (11),
d) représentation visuelle de la courbe en fonction du temps des valeurs (5a, 5b) de mesure agrégées en fonction du temps et de l'information sur le manque de netteté de l'agrégation en fonction du temps des valeurs (5a, 5b) de mesure agrégées en fonction du temps à un operator de l'installation technique, dans lequel on représente visuellement à l'operator de l'installation technique l'information sur le manque de netteté de l'agrégation en fonction du temps des valeurs (5a, 5b) de mesure agrégée en fonction du temps, de manière à ce qu'une diminution d'une représentation visuelle d'une valeur (5a, 5b) de mesure agrégée en fonction du temps dépende du manque de netteté d'agrégation en fonction du temps des valeurs (5a, 5b) de mesure agrégées en fonction du temps, et dans lequel on représente des valeurs (5a, 5b) de mesure agrégées en fonction du temps visuellement sous une forme circulaire.

8. Procédé suivant la revendication 7, dans lequel on représente, à l'operator de l'installation technique, une information visuelle, que pour les valeurs, qui lui sont représentées visuellement, une agrégation en fonction du temps est effectuée.

9. Procédé suivant l'une des revendications 7 ou 8, dans lequel on représente visuellement à l'operator, en réaction à un choix d'une valeur (5a, 5b) de mesure agrégée en fonction du temps représentée visuellement à l'operator, les valeurs (6a, 6b, 6c, 6d) de mesure non agrégées à la base de la valeur (5a, 5b) de mesure intégrée en fonction du temps.

10. Procédé suivant la revendication 9, dans lequel on effectue, parallèlement à la représentation visuelle de la courbe en fonction du temps des valeurs (5a, 5b) de mesure agrégées en fonction du temps, la représentation visuelle des valeurs (6a, 6b, 6c, 6d) de mesure non agrégées choisies à la base de la valeur (5a, 5b) agrégée en fonction du temps.

11. Procédé suivant l'une des revendications 7 à 10, dans lequel l'operator station client (11) fait part, à l'operator station server (10), d'exigences sur l'agrégation en fonction du temps, à l'aide desquelles l'operator station server (10) effectue l'agrégation en fonction du temps des valeurs de mesure.
